# EUROPÄISCHE PATENTANMELDUNG

(11) **EP 0 630 724 A1**
(43) Veröffentlichungstag der Anmeldung: **28.12.1994**
(21) Anmeldenummer: 94103165.0
(22) Anmeldetag: 03.03.1994
(51) Int. Cl.: B26D 7/26, B26D 1/00, F16F 15/20

(54) **Querschneider**

(30) Priorität: 25.06.1993 DE 4321163
(71) Anmelder: Firma Carl Freudenberg, D-69469 Weinheim (DE)
(72) Erfinder: Pfirrmann, Horst, D-69517 Gorxheimertal (DE); Freudenberg, Ulrich, Dr., D-74889 Sinsheim (DE); Iffland, Burkhard, D-69465 Weinheim (DE); Gorges, Dirk, D-68167 Mannheim (DE)

(57) **Zusammenfassung**

Querschneider für eine Bahn aus flexiblem Werkstoff, umfassend einen um seinen Massenschwerpunkt drehbaren, zylindrischen Walzenkörper, der an zumindest einer Umfangsstelle mit einem sich im wesentlichen parallel zu der Achse erstreckenden und in einer metallischen Halterung (2) aufgenommenen, radial nach außen weisenden Messer (3) versehen ist. Der Walzenkörper besteht aus einem Kunststoffrohr (1) wobei die Halterung (2) separat erzeugt und mit dem Kunststoffrohr (1) verbunden ist.

## Beschreibung

Die Erfindung betrifft einen Querschneider für eine Bahn aus flexiblem Werkstoff, umfassend einen um seinen Massenschwerpunkt drehbaren, zylindrischen Walzenkörper, der an zumindest einer Umfangsstelle mit einem sich im wesentlichen parallel zu der Achse erstreckenden und in einer metallischen Halterung aufgenommenen, radial nach außen weisenden Messer versehen ist.

Querschneider der vorgenannten Art sind bekannt. Sie gelangen bei der Herstellung von Bogen aus einer kontinuierlich zugeführten Bahn aus einem flexiblen Werkstoff zur Anwendung, beispielsweise bei der Herstellung von Papierbögen. Die mit dem radial nach außen weisenden Messer versehenen Walzenkörper sind einstückig mit der Halterung aus Stahl erzeugt. Sie weisen dadurch eine große Massenträgheit auf, was es schwierig macht, die Umlaufgeschwindigkeit mit der Zuführgeschwindigkeit der abzutrennenden Bahnen in Übereinstimmung zu bringen.

Der Erfindung liegt die Aufgabe zugrunde, einen solchen Querschneider derart weiterzuentwickeln, daß die Umlaufgeschwindigkeit des Walzenkörpers ohne nennenswerten Energieaufwand feinfühlig an die Zuführgeschwindigkeit der abzuteilenden Bahn anpaßbar ist.

Diese Aufgabe wird erfindungsgemäß mit den kennzeichnenden Merkmalen von Anspruch 1 gelöst. Auf vorteilhafte Ausgestaltungen nehmen die Unteransprüche bezug.

Bei dem erfindungsgemäßen Querschneider ist es vorgesehen, daß der Walzenkörper aus einem Kunststoffrohr besteht und daß die Halterung separat erzeugt und mit dem Kunststoffrohr verbunden ist. Die Trägheitsmasse des Walzenkörpers ist hierdurch sehr stark reduziert, was es wesentlich vereinfacht, die Umlaufgeschwindigkeit des Walzenkörpers an vorgegebene Zuführgeschwindigkeiten anzupassen. Dabei ergibt sich der sekundäre Vorteil, daß sehr geringe Antriebsleistungen für die Erzeugung der Drehbewegung des Walzenkörpers genügen.

Als besonders zweckmäßig hat sich erwiesen, wenn das Kunststoffrohr aus Epoxidharz besteht, das durch Kohlenstoffasern verstärkt ist. Es läßt sich bei Verwendung dieses hochfesten Werkstoffes besonders dünnwandig erzeugen bei Gewährleistung einer ausgezeichneten mechanischen und dynamischen Beständigkeit.

Das Kunststoffrohr kann radial innerhalb der Halterung angeordnet und durch schraubengangartig verteilte Kohlenstoffasern verstärkt sein, die einander überkreuzen. Neben einer guten Biege- und Verdrehfestigkeit wird hierdurch eine gute Dämpfung von Eigenschwingungen erreicht, was die Erzielung eines sauberen Schnittbildes über eine lange Gebrauchsdauer begünstigt.

Bei einer Ausführung des Walzenkörpers, bei der zumindest zwei gleichmäßig in Umfangsrichtung verteilte Halterungen vorgesehen sind, hat es sich als vorteilhaft bewährt, wenn die umfangsgerichteten Zwischenräume der Halterungen durch Kunststoffsegmente ausgefüllt sind. Die Kunststoffsegmente werden zweckmäßig mit dem radial innenliegenden Kunststoffrohr und/oder den Halterungen verklebt, was zu einer weiteren Verbesserung der sich insgesamt ergebenden mechanischen und dynamischen Eigenschaften führt. Zusätzlich resultiert eine zylindrische Außenkontur, was den Austausch der bisher verwendeten, metallischen Walzenkörper gegen die erfindungsgemäße Ausführung vereinfacht.
Die Kunststoffsegmente können zur weiteren Verbesserung der mechanischen und dynamischen Eigenschaften ihrerseits ebenfalls durch Kohlenstoffasern verstärkt sein, welche sich zweckmäßigerweise parallel zu den Halterungen erstrecken. Diese, im wesentlichen parallel zu der Achse orientierten Kohlenstoffasern können ebenso wie die in dem Kunststoffrohr enthaltenen Kohlenstoffasern, welche sich geneigt zu der Achse erstrecken und einander überkreuzen in Form von Strängen und gegebenenfalls in vorgespanntem Zustand in den Kunststoff eingebettet sein.

Wenn das Kunststoffrohr mit mehreren Haltern versehen ist, besteht die Möglichkeit, die einzelnen Halter gleichmäßig in Umfangsrichtung zu verteilen und den Trägheitsmassenschwerpunkt mit der Achse des Kunststoffrohres und der Rotationsachse in Übereinstimmung zu bringen. Unwuchtprobleme können bei solchen Ausführungen naturgemäß nicht auftreten. Sie werden in den meisten Fällen bevorzugt.

Durch die geringe Trägheitsmasse des erfindungsgemäß verwendeten Kunststoffrohres besteht jedoch die Möglichkeit, bei Bedarf nur eine einzige Halterung an dessen Außenumfang anzubringen, wobei der Trägheitsmassenschwerpunkt in die Rotationsachse gelegt wird, so daß sich ein Abstand von der Achse des Kunststoffrohres ergibt. Unwuchterscheinungen bei Einleitung einer Drehbewegung können auch bei solchen Ausführungen nicht auftreten. Sie lassen es zu, großformatige Bögen aus einer flexiblen Bahn herauszutrennen, ohne daß es der Verwendung eines Walzenkörpers von sehr großem Durchmesser bedarf.

Die Erfindung wird nachfolgend anhand der beigefügten Zeichnung weiter verdeutlicht. Es zeigen:
Figur 1 eine erste Ausführung eines Walzenkörpers zur Verwendung in dem erfindungsgemäßen Querschneider
Figur 2 eine zweite Ausführung eines brauchbaren Walzenkörpers.

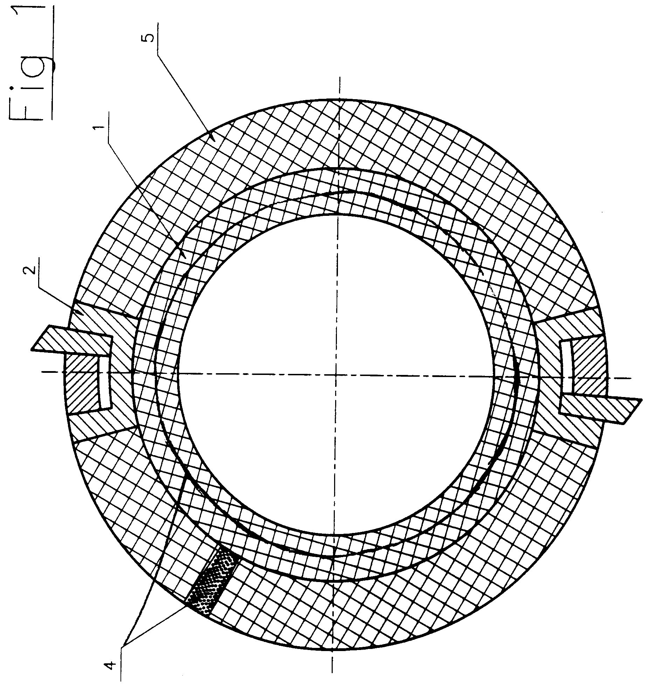

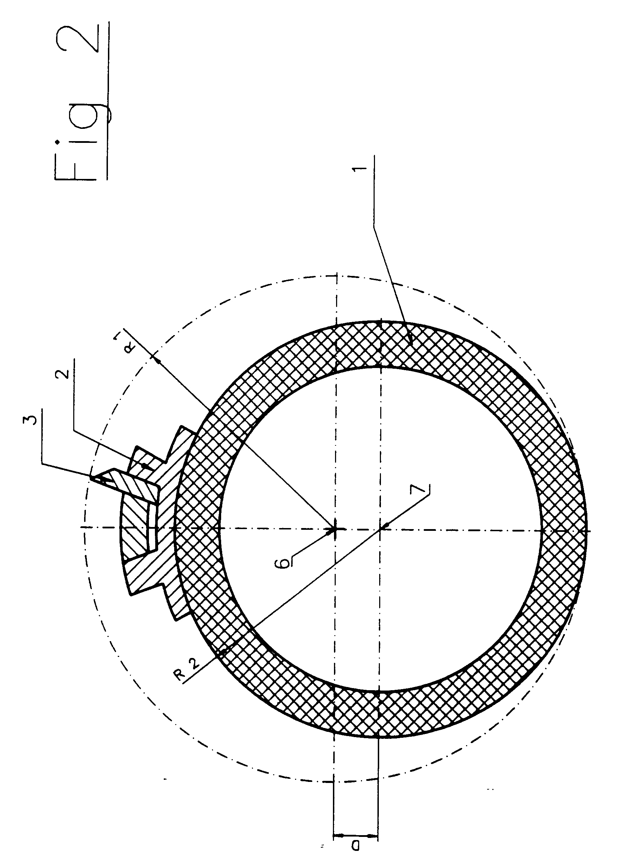

Figur 1 zeigt einen um seinen Massenschwerpunkt drehbaren, zylindrischen Walzenkörper, der an zwei Umfangsstellen mit sich im wesentlichen parallel zu der Achse erstreckenden Halterungen für radial nach außen weisende Messer versehen ist. Die Halterungen können bei einer im wesentlichen V-förmig begrenzten Außenkontur entsprechend der in Figur 2 gezeigten Variante gestaltet sein. Sie sind separat erzeugt, bestehen aus Metall und sind auf dem Außenumfang eines Kunststoffrohres 1 angeordnet. Dieses besteht aus Epoxidharz, welches durch Kohlenstoffasern 4 verstärkt ist. Die Kohlenstoffasern sind in Strängen zusammengefaßt und schichtweise nach Art eines kontinuierlich durchgehenden Schraubenganges in den Mantel des Kunststoffrohres eingebettet, wobei die Neigungsrichtung, bezogen auf die Achse schichtweise wechselt. Der bevorzugte Neigungswinkel beträgt etwa .° Die Kohlenstoffasern sind für während ihrer Einbindung in das Epoxidharz vorgespannt. Sie verleihen dem aus dem Epoxidharz erzeugten Kunststoffrohr sehr gute mechanische und dynamische Eigenschaften.

Die umfangsgerichteten Zwischenräume der Halterungen 2 sind mit Kunststoffsegmenten 5 ausgefüllt, welche ihrerseits durch Kohlenstoffasern 4 verstärkt und mit dem Kunststoffrohr 1 und den Haltern 2 verklebt sind. Die Kohlenstoffasern erstrecken sich im wesentlichen parallel zu den Haltern 2 und zu der Rotationsachse des Kunststoffrohres 1. Sie sind während ihrer Einbindung in das Epoxidharz vorgespannt. Der gebrauchsfertige Walzenkörper ist innen- und außenseitig durch Zylinderflächen begrenzt, welche einander und die Rotationsachse konzentrisch umschließen. Der Walzenkörper ist stirnseitig in Lagerzapfen aufgenommen, die aus einem metallischen Werkstoff bestehen und die gebräuchlichen Abmessungen haben können.

Figur 2 zeigt eine Ausführung, bei der auf dem Außenumfang des Kunststoffrohres 1 nur an einer Umfangsstelle ein Halter 2 vorgesehen ist, in dem ein nach außen weisendes Messer 3 mittels eines Keiles auf an sich bekannte Weise verankert ist. Die mit dem Massenträgheitsschwerpunkt zusammenfallende Rotationsachse 6 hat einen Abstand D von der Achse 7 des Kunststoffrohres 1. Hieraus resultiert eine exzentrische Umlaufbewegung des Kunststoffrohres 1 während der bestimmungsgemäßen Verwendung des Walzenkörpers, die jedoch nicht mit Unwuchterscheinungen verbunden und dadurch leicht beherrschbar ist.

## Patentansprüche

1. Querschneider für eine Bahn aus flexiblem Werkstoff, umfassend einen um seinen Massenschwerpunkt drehbaren, zylindrischen Walzenkörper, der an zumindest einer Umfangsstelle mit einem sich im wesentlichen parallel zu der Achse erstreckenden und in einer metallischen Halterung (2) aufgenommenen, radial nach außen weisenden Messer (3) versehen ist, dadurch gekennzeichnet, daß der Walzenkörper aus einem Kunststoffrohr(1) besteht und daß die Halterung (2) separat erzeugt und mit dem Kunststoffrohr (1) verbunden ist.

2. Querschneider nach Anspruch 1, dadurch gekennzeichnet, daß das Kunststoffrohr (1) aus durch Kohlenstoffasern (4) verstärktem Epoxidharz besteht.

3. Querschneider nach Anspruch 1 bis 2, dadurch gekennzeichnet, daß das Kunststoffrohr (1) radial innerhalb der Halterung (2) angeordnet und durch schraubengangartig verteilte Kohlenstoffasern (4) verstärkt ist, die einander überkreuzen.

4. Querschneider nach Anspruch 3, dadurch gekennzeichnet, daß zumindest zwei gleichmäßig in Umfangsrichtung verteilte Halterungen (2) vorgesehen sind und daß die umfangsgerichteten Zwischenräume der Halterungen (2) durch Kunststoffsegmente (5) ausgefüllt sind.

5. Querschneider nach Anspruch 4, dadurch gekennzeichnet, daß die Kunststoffsegmente (5) mit dem Kunstoffrohr (1) und/oder den Halterungen (2) verklebt sind.

6. Querschneider nach Anspruch 4 bis 5, dadurch gekennzeichnet, daß die Kunststoffsegmente (5) durch Kohlenstoffasern (4) verstärkt sind, die sich im wesentlichen parallel zu den Halterungen (2) erstrecken.

7. Querschneider nach Anspruch 2 bis 6, dadurch gekennzeichnet, daß die Kohlenstoffasern (4) in Form von Fasersträngen in den Kunststoff eingebettet sind.

8. Querschneider nach Anspruch 2 bis 7, dadurch gekennzeichnet, daß die Kohlenstoffasern in vorgespanntem Zustand in den Kunststoff eingebettet sind.

9. Querschneider nach Anspruch 1 bis 2, dadurch gekennzeichnet, daß mit dem Kunststoffrohr (1) nur eine Halterung (2) verbunden ist und daß der Massenträgheitsschwerpunkt der umlaufenden Bestandteile mit der Rotationsachse (6) zusammengelegt ist, so daß sich ein Abstand D von der Achse des Kunststoffrohres (1) ergibt.
